# EUROPÄISCHE PATENTSCHRIFT

(11) **EP 2 190 690 B1**
(45) Veröffentlichungstag und Bekanntmachung des Hinweises auf die Patenterteilung: **05.12.2012**
(21) Anmeldenummer: 08785683.7
(22) Anmeldetag: 22.08.2008
(51) Int. Cl.: B60N 2/48, B60N 2/42, B60N 2/427, B60N 2/68

(54) **FAHRZEUGSITZ**
VEHICLE SEAT
SIÈGE DE VÉHICULE

(30) Priorität: 22.08.2007 DE 102007039740; 28.01.2008 DE 102008006412
(43) Veröffentlichungstag der Anmeldung: 02.06.2010
(73) Patentinhaber: Johnson Controls GmbH, 51399 Burscheid (DE)
(72) Erfinder: PELLENZ, Wolfgang, 53340 Meckenheim (DE); BHARAMBE, Sachin, Pune 411 027, Maharashtra (IN); WAYAL, Vikas, Kothrud Punie 411038, Maharashtra (IN); HÜBSCH, Christian, 42369 Wuppertal (DE); NDAGIJIMANA, Robin, 41469 Neuss (DE); HARTLAUB, Silvio, 50259 Pulheim Sinnersdorf (DE)
(74) Vertreter: Schwöbel, Thilo K.
(86) Internationale Anmeldenummer: PCT/EP2008/006926
(87) Internationale Veröffentlichungsnummer: WO 2009/024354

(56) Entgegenhaltungen:
- EP-A- 1 167 116
- WO-A-91/04175
- WO-A-2006/037801
- DE-A1- 10 041 529
- DE-A1- 10 113 091
- DE-A1-102005 021 482
- DE-B3-102004 016 474

## Beschreibung

Die Erfindung betrifft einen Fahrzeugsitz, insbesondere für ein Kraftfahrzeug, mit einem Sitzteil und einer Rückenlehne.

Die vorliegende Erfindung geht aus von einem Fahrzeugsitz mit einer Rückenlehne und einer aktiven Kopfstütze, wobei der Fahrzeugsitz eine Auslöseeinrichtung und einen Energiespeicher aufweist, wobei in einer normalen Betriebssituation des Fahrzeugsitzes eine Blockierung des Energiespeichers vorgesehen ist, wobei in einer Unfallsituation eine Auslösung des Energiespeichers vorgesehen ist und wobei mittels der Auslösung des Energiespeichers die Betätigung der aktiven Kopfstütze vorgesehen ist. Weiterhin geht die vorliegende Erfindung aus von einem Fahrzeugsitz, der in der deutschen Patentanmeldung DE 10 2005 021 482 A1 beschrieben wird. Auf die Offenbarung in dieser Patentanmeldung wird ausdrücklich verwiesen und zum Gegenstand dieser Patentanmeldung gemacht.

Sogenannte aktive Kopfstützen sind allgemein bekannt. Zu deren Aktuierung ist es bekannt, Betätigungseinrichtungen bzw. Aktuierungseinrichtungen im unteren Teil der Rückenlehne eines mit einer solchen aktiven Kopfstütze ausgestatteten Sitzes vorzusehen. Druckschrift DE 100 41 529 A1 offenbart einen Fahrzeugsitz mit einer aktiven Kopfstütze und einem Energiespeicher in der Kopfstütze. Druckschrift DE 10 2004 016474 B3 offenbart eine aktive Kopfstütze, wobei zur Auslösung eines Energiespeichers ein Elektromagneten vorgesehen ist. Druckschrift WO 2006/037801 A1 offenbart ein Aktuierungsmittel für eine crashaktive Kopfstütze, wobei ein Energiespeicher in der Kopfstütze angeordnet ist. Druckschrift DE 101 13 091 A1 offenbart einen Kraftfahrzeugsitz mit einer crashaktiven Kopfstütze, wobei sich die Kopfstütze durch die auf eine Prallplatte einwirkenden Trägheitskräfte verlagert.

Der Erfindung liegt die Aufgabe zugrunde, einen Fahrzeugsitz mit einer Rückenlehne und mit einer aktiven Kopfstütze derart vorzusehen, dass ein Höchstmaß an Sicherheit mit einem vergleichsweise einfachen und kostengünstigen Aufbau des Fahrzeugsitzes verbunden werden kann. Ferner liegt der Erfindung die Aufgabe zugrunde, einen Fahrzeugsitz mit einer Rückenlehne mit einer besonders geringen Bautiefe bereitzustellen, ohne dass der Komfort gegenüber herkömmlichen Fahrzeugsitzen verschlechtert wird und gleichzeitig ein hohes Maß an Insassensicherheit bereitzustellen, insbesondere für den Fall von sogenannten Rückwärtsunfällen oder Heckcrashs, wo aktive Kopfstützen zum Einsatz kommen.

Die Aufgabe wird gemäß eines Ausführungsbeispiels gelöst durch einen Fahrzeugsitz mit einer Rückenlehne die eine Schalenstruktur aufweist wobei die Rückenlehne eine Auslöseeinrichtung und einen Energiespeicher aufweist, wobei in einer normalen Betriebssituation des Fahrzeugsitzes eine Blockierung des Energiespeichers vorgesehen ist, wobei in einer Unfallsituation eine Auslösung des Energiespeichers vorgesehen ist und wobei mittels der Auslösung des Energiespeichers die Betätigung einer aktiven Kopfstütze vorgesehen ist. Hierdurch kann mit einfachen Mitteln eine Betätigung einer aktiven Kopfstütze in einer Unfallsituation erfolgen und trotzdem ein erheblicher Teil des Gewicht von solchen der Auslösung der aktiven Kopfstütze dienenden Elementen - insbesondere des Energiespeichers - im unteren Teil der Rückenlehne untergebracht werden, so dass sich ein vergleichsweise geringes Kippmoment im Falle eines Unfalls ergibt. Weiterhin ist es dadurch vorteilhaft möglich, dass ein annähernd beliebig langer Betätigungsweg zur Auslösung bzw. zur Ausstellung der aktiven Kopfstütze in ihre ausgestellte (einer Unfallsituation angepassten) Einstellung realisierbar ist, obwohl die Bewegung der Rückenlehne bzw. die Bewegung der Schalenstruktur relativ zum gesamten Fahrzeugsitz in einer Unfallsituation vergleichsweise gering ist und aufgrund der vergleichsweise geringen Bautiefe der Rückenlehne auch vergleichsweise gering sein muss.

Erfindungsgemäß ist ferner bevorzugt, dass die Auslöseeinrichtung einen um die Drehachse schwenkbaren Hebel aufweist. Erfindungsgemäß ist es beispielsweise vorgesehen, im unteren Teil einer erfindungsgemäßen Rückenlehne mit besonders geringer Bautiefe, welche eine Schalenstruktur aufweist, die an eine Rahmenstruktur in einer eine gewisse Flexibilität aufweisenden Art und Weise angebunden ist, ein Gelenk bzw. eine Hebelanordnung derart anzuordnen, dass eine unterschiedliche Neigung bzw. Belastung der Schalenstruktur der Rückenlehne des Fahrzeugsitzes zu einer unterschiedlichen Gelenkeinstellung bzw. einer unterschiedlichen Hebeleinstellung bzw. zu einem unterschiedlichen Schwenkwinkel des Hebels führt. Durch eine solche Anordnung ist es erfindungsgemäß in einfacher Weise möglich, sowohl eine sehr geringe Bautiefe der Rückenlehne zu realisieren als auch eine Auslösung einer aktiven Kopfstütze bei einem Rückwärtsunfall zu erreichen. Das Vorsehen eines Hebels schafft vorteilhaft die Möglichkeit, dass der Hebel sowohl in einem Komfortbereich, d.h. einem Bereich der normalen Benutzung des Fahrzeugsitzes, als auch in einem Aktuierungsschwenkwinkelbereich beweglich sein kann, etwa zur Bereitstellung einer komforterzeugenden Nachgiebigkeit des Fahrzeugsitzes bzw. der Rückenlehne bzw. der Schalenstruktur des Fahrzeugsitzes und zur Auslösung des Energiespeichers. In diesem Fall entspricht der Aktuierungsschwenkwinkelbereich lediglich einem Teil des gesamten Bewegungsbereichs des Hebels. Alternativ hierzu kann der Hebel jedoch auch lediglich im Fall eines (Rückwärts-)Unfalls (und dann zur Auslösung des Energiespeichers) bewegt werden, so dass der Aktuierungsschwenkwinkelbereich dem gesamten Bewegungsbereich des Hebels entspricht.

Die folgenden bevorzugten Auführungsvarianten können mit beiden Ausführungsbeispielen realisert werden:

Besonders bevorzugt ist es, dass der Fahrzeugsitz eine Übertragungseinrichtung, insbesondere einen Bowdenzug, aufweist, wobei die Übertragungseinrichtung zur Weiterleitung einer Aktuierungskraft vom Energiespeicher zur aktiven Kopfstütze vorgesehen ist. Hierdurch kann ein sehr günstiges Gewichtsverhältnis bzw. ein sehr günstiger Gewichtsverlauf innerhalb des Fahrzeugsitzes im Sinne eines vergleichsweise geringen Gewichts im oberen Teil der Rückenlehne erzielt werden. Ferner kann hierdurch die Aktuierungskraft ausgehend vom Energiespeicher in sicherer Weise zur aktiven Kopfstütze weitergeleitet werden.

Ferner ist es erfindungsgemäß bevorzugt, dass die Rückenlehne zur Neigungseinstellung um eine Drehachse schwenkbar vorgesehen ist. Hierdurch kann der erfindungsgemäße Fahrzeugsitz anstelle herkömmlicherweise verwendeter Fahrzeugsitze mit neigungsverstellbarer Rückenlehne eingesetzt werden.

Gemäß einer weiteren bevorzugten Ausführungsform der vorliegenden Erfindung ist es vorgesehen, dass die Auslöseeinrichtung in einer normalen Betriebssituation des Fahrzeugsitzes die Blockierung des Energiespeichers und in einer Unfallsituation die Auslösung des Energiespeichers bewirkt.

Weiterhin ist es erfindungsgemäß bevorzugt vorgesehen, dass die Auslöseeinrichtung lediglich in einer Rückwärtsunfallsituation die Auslösung des Energiespeichers bewirkt. Hierdurch kann in vorteilhafter Weise spezifisch auf unterschiedliche Unfallsituationen eingegangen werden.

Ferner ist es auch bevorzugt, dass eine die Auslösung des Energiespeichers bewirkende Betätigung der Auslöseeinrichtung aufgrund einer Relativbewegung der Sitzschale gegenüber dem Fahrzeugsitz vorgesehen ist. Hierdurch kann in vorteilhafter Weise die Elastizität der Sitzschale zur Auslösebewegung herangezogen werden. Die Relativbewegung der Sitzschale gegenüber dem Fahrzeugsitz kann bevorzugt aufgrund einer vom Sitzinsassen ausgeübten Trägheitskraft erfolgen.

Weiterhin ist es erfindungsgemäß bevorzugt, dass der Energiespeicher als eine Zugfeder oder als eine Druckfeder vorgesehen ist. Hierdurch ist es erfindungsgemäß vorteilhaft möglich, eine Mehrzahl von Aktuierungsarten vorzusehen.

Ausführungsbeispiele der Erfindung sind in der Zeichnung dargestellt und in der nachfolgenden Beschreibung näher erläutert.

Die Figuren 1 bis 3 zeigen hierbei ein zweites Ausführungsbeispiel und die Figuren 4 bis 7 zeigen ein erstes Ausführungsbeispiel.
Figur 1 zeigt eine erste Ausführungsform einer Auslöseeinrichtung und eines Energiespeichers in einem unteren Teil einer erfindungsgemäßen Rückenlehne bzw. eines erfindungsgemäßen Fahrzeugsitzes in einer normalen Betriebssituation des Fahrzeugsitzes (mit blockiertem Energiespeicher).
Figur 2 zeigt die erste Ausführungsform der Auslöseeinrichtung und des Energiespeichers in (oder nach) einer Unfallsituation des Fahrzeugsitzes (mit ausgelöstem Energiespeicher).
Figur 3 zeigt eine zweite Ausführungsform einer Auslöseeinrichtung und eines Energiespeichers in einem unteren Teil einer erfindungsgemäßen Rückenlehne bzw. eines erfindungsgemäßen Fahrzeugsitzes in einer normalen Betriebssituation des Fahrzeugsitzes (mit blockiertem Energiespeicher).
Figuren 4 und 5 zeigen schematisch eine Kopfstütze in einer Seitendarstellung (Figur 4) und einer Vorder- bzw. Rückansicht (Figur 5) gemäß des ersten Ausführungsbeispiels der vorliegenden Erfindung.
Figuren 6 und 7 zeigen schematisch zwei verschiedene Ausführungsformen einer im Bereich der Rückenlehne vorzusehenden Aktuierungseinrichtung für die Betätigung der aktiven Kopfstütze für einen Fahrzeugsitz gemäß dem ersten Ausführungsbeispiel der vorliegenden Erfindung.

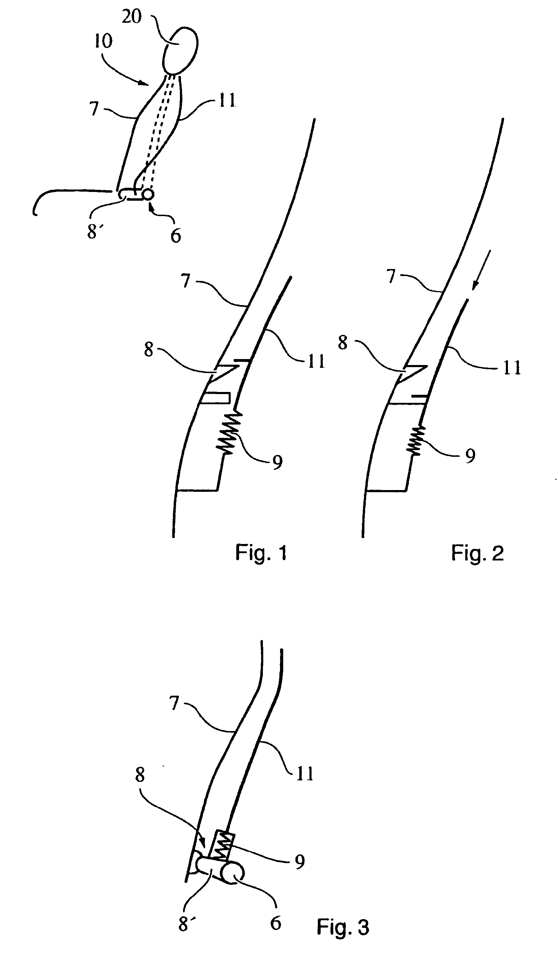

Die Figuren stellen beispielhaft und schematisch zwei Ausführungsformen der Erfindung dar. Die in den Figuren 1 bis 3 gezeigte Rückenlehne entspricht in ihrem prinzipiellen Aufbau der in der deutschen Patentanmeldung DE 10 2005 021 482 A1 offenbarten Ausbildung.

Die Figuren 1 bis 3 stellen beispielhaft und schematisch verschiedene Ausführungsformen der Erfindung gemäß dem zweiten Ausführungsbeispiel dar, wobei die Rückenlehne 10 (bzw. der untere Teil der Rückenlehne) in ihrem prinzipiellen Aufbau der in der deutschen Patentanmeldung DE 10 2005 021 482 A1 offenbarten Ausbildung entspricht. Schematisch ist ein solcher Fahrzeugsitz mit einer erfindungsgemäßen Rückenlehne im oberen Teil der Figur 1 in einer angedeuteten Seitendarstellung dargestellt.

Das Sitzteil (lediglich im oberen Teil der Figur 1 angedeutet) des Fahrzeugsitzes umfasst in herkömmlicher Weise eine Metallstruktur, insbesondere aus Stahlblech geschweißt. Ein im hinteren Bereich der Metallstruktur angeordneter Lehnenneigungsversteller (nicht dargestellt) ist mit den auskragenden bzw. freien Enden eines U-förmigen Rahmenteils der Rückenlehne 10 derart verbunden, dass die Rückenlehne 10 winkelverstellbar zum Sitzteil ist. Im Bereich der Achse des Lehnenneigungsverstellers ist ein (eine Drehachse 6 definierendes) Querrohr 6 durch die Rückenlehne 10 angeordnet. Im vorderen Bereich der Rückenlehne ist eine Sitzschale 7 angeordnet. Mit der Sitzschale 7 kann gemäß der zweiten Ausführungsform ein Hebel 8' verbunden sein bzw. an der Sitzschale 7 kann gemäß der zweiten Ausführungsform ein Hebel 8' anstehen, der um das Querrohr 6 drehbar vorgesehen ist.

Gemäß beider Ausführungsformen (sowohl Figuren 1 und 2 als auch Figur 3) ist mit der Sitzschale 7 eine Auslöseeinrichtung 8 für einen Energiespeicher 9, insbesondere eine vorgespannte Feder, verbunden. Im unteren Teil der Figur 1 ist der Zustand der ersten Ausführungsform ohne Auslösung des Energiespeichers 9 dargestellt. Hierbei ist die Auslöseeinrichtung 8 derart relativ zum Energiespeicher 9 angeordnet, dass für den Fall normaler Betriebssituationen, insbesondere Bewegungen des Sitzinsassen im normalen Komfortbereich, keine Auslösung des Energiespeichers 9 erfolgt. Hierdurch wird auch kein Zug bzw. keine Aktuierungskraft auf eine Übertragungseinrichtung 11, insbesondere ein Bowdenzug, übertragen, die in der Lage ist, die (lediglich im oberen Teil der Figur 1 dargestellte) aktive Kopfstütze zu betätigen bzw. in eine Sicherheitseinstellung zu überführen. In Figur 2 ist der Zustand der ersten Ausführungsform nach der Auslösung des Energiespeichers 9 dargestellt. Die Sitzschale 7 wurde beispielsweise durch einen Rückwärtsunfall derart bewegt, dass die Auslöseeinrichtung 8 eine Bewegung solcher Art erfahren hat, dass die Blockierung des Energiespeichers 9 aufgehoben ist und beispielsweise eine Federkraft als Zugkraft oder als Druckkraft von dem Energiespeicher 9 auf die Übertragungseinrichtung 11 übertragen und damit die aktive Kopfstütze betätigt wird. Die erfindungsgemäße Maßnahme hat als einen wesentlichen Vorteil, dass eine fast beliebige Aktuationslänge zur Betätigung der aktiven Kopfstütze zur Verfügung steht und diese Aktuationslänge im wesentlichen nicht von den besonderen Abmessungen bzw. Bewegungen der Sitzschale 7 im Falle eines Unfalls abhängt.

Gemäß der in der Figur 3 schematisch dargestellten zweiten Ausführungsform einer Rückenlehne 10 eines erfindungsgemäßen Fahrzeugsitzes ist es vorgesehen, dass der Hebel 8' entweder Teil der Auslöseeinrichtung 8 ist oder mit dieser zusammenwirkt. Beispielsweise kann durch die Auslöseeinrichtung 8 eine Drehung des Hebels 8' detektiert werden oder eine Drehung des Hebel 8' um einen Mindestwinkel detektiert werden, wobei im Anschluss daran (d.h. bei Weiterdrehen des Hebels 8') die Auslösung des Energiespeichers 9 erfolgt. Insbesondere kann der Hebel 8' in einem ersten Schwenkwinkelbereich (nicht dargestellt) zu Komfortzwecken um die Drehachse 6 beweglich vorgesehen sein - ohne eine Auslösung des Energiespeichers 9 zu bewirken - und ferner in einem Aktuierungsschwenkwinkelbereich um die Drehachse 6 beweglich vorgesehen sein - wobei eine Auslösung des Energiespeichers 9 erfolgt.

In sämtlichen Ausführungsformen des zweiten Ausführungsbeispiels der vorliegenden Erfindung sind erfindungsgemäß beispielsweise Auslöseeinrichtungen 8 vorgesehen, wie sie im europäischen Patent EP 0 491 744 B1 offenbart sind. Die Offenbarung dieses Dokuments wird hiermit durch Bezugnahme in die vorliegende Patentanmeldung aufgenommen.

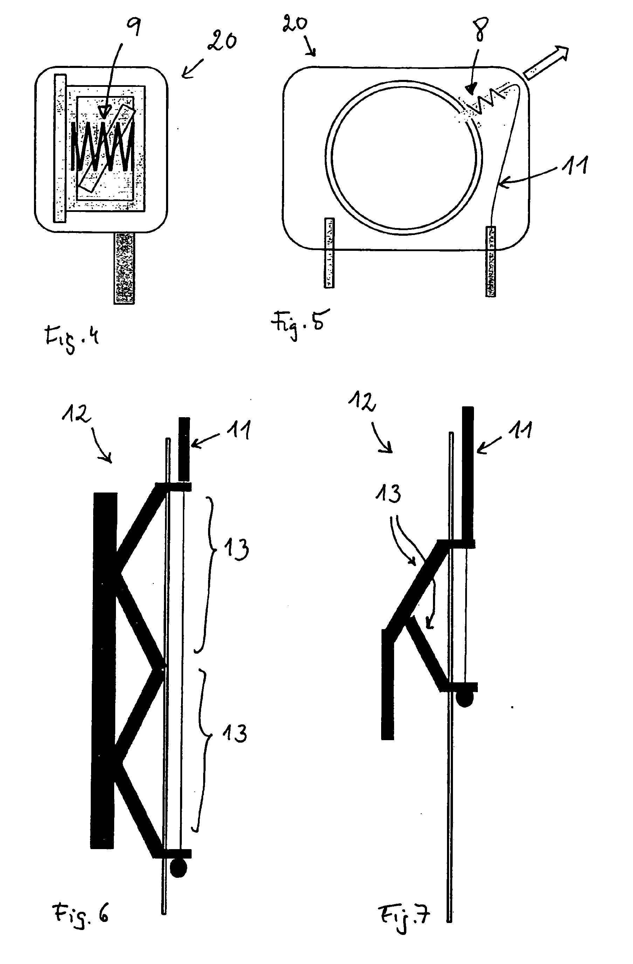

In Figur 4 ist schematisch eine aktive Kopfstütze 20 in einer Seitendarstellung und in Figur 5 eine aktive Kopfstütze 20 gemäß einer Vorder- bzw. Rückansicht gemäß dem ersten Ausführungsbeispiel der vorliegenden Erfindung dargestellt. Die Kopfstütze 20 ist an einer für das erste Ausführungsbeispiel nicht dargestellten Rückenlehne 10 angebracht und insbesondere höhenverstellbar und/oder kippbar und/oder in anderer Weise zu Komfortzwecken eines Benutzers verstellbar vorgesehen. Die aktive Kopfstütze 20 ist darüberhinaus in eine Sicherheitsstellung einstellbar, so dass der Fahrzeuginsasse bei einer Unfallsituation - insbesondere bei einem Rückwärtsunfall - geschützt ist. Die Einstellung der Sicherheitsstellung erfolgt bei der aktiven Kopfstütze 20 mit einem Energiespeicher 9, der in Figur 4 schematisch als angedeutete Feder dargestellt ist. Ein solcher Energiespeicher 9 ist beispielsweise als mechanische Druck- oder Zugfeder ausgebildet und bewegt einen vorderen Teil der aktiven Kopfstütze in Richtung zum Hinterkopf des Sitzinsassen, d.h. in der Regel nach vorne. Der Energiespeicher 9 ist im Normalbetrieb gespannt. Erst in einer Unfallsituation wird der Energiespeicher 9 ausgelöst. Hierfür ist eine Auslöseeinrichtung 8 vorgesehen, etwa eine Blockiereinrichtung, die die Bewegung der aktiven Kopfstütze 20 nach vorne (d.h. in ihre Sicherheitsstellung) im Normalbetrieb der aktiven Kopfstütze 20 verhindert und lediglich in Figur 5 dargestellt ist. Gemäß dem ersten Ausführungsbeispiel der Erfindung ist insbesondere vorgesehen, dass sowohl der Energiespeicher 9 als auch die Auslöseeinrichtung 8 in der Kopfstütze 20 angeordnet sind und dass zur Betätigung der aktiven Kopfstütze 20, d.h. zur Auslösung der Auslöseeinrichtung (bzw. zum Deblockieren der Auslöseeinrichtung), eine Signalübertragung von einer in den Figuren 6 und 7 dargestellten Aktuierungsvorrichtung 12 vogesehen ist. Diese Signalübertragung kann erfindungsgemäß insbesondere in Form eines Kraftsignals bzw. eines Impulssignals von der Aktuierungsvorrichtung 12 über eine Übertragungseinrichtung 11 zur Auslöseeinrichtung 8 erfolgen. Die Aktuierungsvorrichtung 12 umfasst gemäß dem ersten Ausführungsbeispiel der vorliegenden Erfindung insbesondere ein Knickhebelpaar 13 (Ausführungsform gemäß der Figur 6 7) oder aber mehr als ein Knickhebelpaar 13, insbesondere zwei Knickhebelpaare (Ausführungsform gemäß Figur 6). Ein Aufprall des Körpers eines Sitzinsassen auf ein in den Figuren 6 und 7 links dargestelltes Prallelement bewirkt eine Längung des Übertragungselements 11 (insbesondere ein Bowdenzug 11), was zur Signalübertragung zur Auslöseeinrichtung 8 und damit zur Aktuierung der aktiven Kopfstütze führt.

### Bezugszeichenliste

- 6: Querrohr / Drehachse
- 7: Sitzschale
- 8: Auslöseeinrichtung
- 8': Hebel
- 9: Energiespeicher
- 10: Rückenlehne
- 11: Übertragungseinrichtung / Bowdenzug
- 12: Aktuierungseinrichtung
- 13: Knickhebelpaar
- 20: Kopfstütze

## Patentansprüche

1. Fahrzeugsitz mit einer Rückenlehne (10), wobei die Rückenlehne (10) eine Schalenstruktur (7) aufweist, **dadurch gekennzeichnet, dass** die Rückenlehne (10) eine Auslöseeinrichtung (8) und einen Energiespeicher (9) aufweist, wobei in einer normalen Betriebssituation des Fahrzeugsitzes (10) eine Blockierung des Energiespeichers (9) vorgesehen ist, wobei in einer Unfallsituation eine Auslösung des Energiespeichers (9) vorgesehen ist, wobei mittels der Auslösung des Energiespeichers (9) die Betätigung einer aktiven Kopfstütze (20) vorgesehen ist, wobei eine die Auslösung des Energiespeichers (9) bewirkende Betätigung der Auslöseeinrichtung (8) aufgrund einer Relativbewegung der Schalenstruktur (7) gegenüber dem Fahrzeugsitz vorgesehen ist, und wobei die Relativbewegung der Schalenstruktur (7) gegenüber dem Fahrzeugsitz aufgrund einer von einem Sitzinsassen ausgeübten Trägheitskraft vorgesehen ist.

2. Fahrzeugsitz nach Anspruch 1, **dadurch gekennzeichnet, dass** die Auslöseeinrichtung (8) einen um eine Drehachse (6) schwenkbaren Hebel aufweist.

3. Fahrzeugsitz nach einem der vorhergehenden Ansprüche, **dadurch gekennzeichnet, dass** der Fahrzeugsitz eine Übertragungseinrichtung (11), insbesondere einen Bowdenzug, aufweist, wobei die Übertragungseinrichtung (11) zur Weiterleitung einer Aktuierungskraft vom Energiespeicher (9) zur aktiven Kopfstütze (20) vorgesehen ist.

4. Fahrzeugsitz nach einem der vorhergehenden Ansprüche, **dadurch gekennzeichnet, dass** die Rückenlehne (10) zur Neigungseinstellung um die Drehachse (6) schwenkbar vorgesehen ist.

5. Fahrzeugsitz nach einem der vorhergehenden Ansprüche, **dadurch gekennzeichnet, dass** die Auslöseeinrichtung (8) in einer normalen Betriebssituation des Fahrzeugsitzes (10) die Blockierung des Energiespeichers (9) und in einer Unfallsituation die Auslösung des Energiespeichers (9) bewirkt.

6. Fahrzeugsitz nach einem der vorhergehenden Ansprüche, **dadurch gekennzeichnet, dass** die Auslöseeinrichtung (8) lediglich in einer Rückwärtsunfallsituation die Auslösung des Energiespeichers (9) bewirkt.

7. Fahrzeugsitz nach einem der vorhergehenden Ansprüche, **dadurch gekennzeichnet, dass** der Energiespeicher (9) als eine Zugfeder oder als eine Druckfeder vorgesehen ist.

## Claims

1. Vehicle seat with a backrest (10), the backrest (10) comprising a shell structure (7), **characterized in that** the backrest (10) comprises a release device (8) and an energy store (9), during a normal operating situation of the vehicle seat (10), blocking of the energy store (9) being provided, during an accident a release of the energy store (9) being provided, by means of the release of the energy store (9) the actuation of an active headrest (20) being provided, an actuation of the release device (8), effecting the release of the energy store (9), being provided due to a relative movement of the shell structure (7) relative to the vehicle seat, and the relative movement of the shell structure (7) with regard to the vehicle seat being provided due to a force of inertia exerted by the seat occupant.

2. Vehicle seat according to Claim 1, **characterized in that** the release device (8) comprises a lever which may be pivoted about an axis of rotation (6).

3. Vehicle seat according to one of the preceding claims, **characterized in that** the vehicle seat comprises a transmission device (11), in particular a Bowden cable, the transmission device (11) being provided for transferring an actuating force from the energy store (9) to the active headrest (20).

4. Vehicle seat according to one of the preceding claims, **characterized in that** the backrest (10) is provided pivotable about the axis of rotation (6) for the inclination adjustment.

5. Vehicle seat according to one of the preceding claims, **characterized in that** the release device (8) in a normal operating situation of the vehicle seat (10) effects the blocking of the energy store (9) and in an accident situation effects the release of the energy store (9).

6. Vehicle seat according to one of the preceding claims, **characterized in that** the release device (8) effects the release of the energy store (9) only in a rear accident situation.

7. Vehicle seat according to one of the preceding claims, **characterized in that** the energy store (9) is provided as a tension spring or as a compression spring.

## Revendications

1. Siège de véhicule doté d'un dossier (10), le dossier (10) présentant une structure de coque (7), **caractérisé en ce que** le dossier (10) comprend un dispositif de déclenchement (8) et un accumulateur d'énergie (9), un blocage de l'accumulateur d'énergie (9) étant prévu dans une situation de fonctionnement normale du siège de véhicule (10), un déclenchement de l'accumulateur d'énergie (9) étant prévu dans une situation d'accident, l'actionnement d'un appui-tête actif (20) étant prévu au moyen du déclenchement de l'accumulateur d'énergie (9), un actionnement, provoquant le déclenchement de l'accumulateur d'énergie (9), du dispositif de déclenchement (8) étant produit en raison d'un mouvement relatif de la structure de coque (7) par rapport au siège de véhicule, et le mouvement relatif de la structure de coque (7) par rapport au siège de véhicule étant produit en raison d'une force d'inertie exercée par un occupant du siège.

2. Siège de véhicule selon la revendication 1, **caractérisé en ce que** le dispositif d'actionnement (8) comprend un levier pivotant autour d'un axe de rotation (6).

3. Siège de véhicule selon l'une quelconque des revendications précédentes, **caractérisé en ce que** le siège de véhicule comprend un dispositif de transmission (11), en particulier un câble Bowden, le dispositif de transmission (11) étant prévu pour la transmission d'une force d'actionnement de l'accumulateur d'énergie (9) à l'appui-tête actif (20).

4. Siège de véhicule selon l'une quelconque des revendications précédentes, **caractérisé en ce que** le dossier (10) est disposé de manière pivotante autour de l'axe de rotation (6) pour le réglage de l'inclinaison.

5. Siège de véhicule selon l'une quelconque des revendications précédentes, **caractérisé en ce que** le dispositif de déclenchement (8) provoque, dans une situation de fonctionnement normale du siège de véhicule (10), le blocage de l'accumulateur d'énergie (9) et, dans une situation d'accident, le déclenchement de l'accumulateur d'énergie (9).

6. Siège de véhicule selon l'une quelconque des revendications précédentes, **caractérisé en ce que** le dispositif de déclenchement (8) provoque le déclenchement de l'accumulateur d'énergie (9) seulement dans une situation d'accident à l'arrière.

7. Siège de véhicule selon l'une quelconque des revendications précédentes, **caractérisé en ce que** l'accumulateur d'énergie (9) est prévu en tant que ressort de traction ou en tant que ressort de compression.
